# EUROPEAN PATENT SPECIFICATION

(11) **EP 2 752 168 B1**
(45) Date of publication and mention of the grant of the patent: **06.03.2019**
(21) Application number: 13779109.1
(22) Date of filing: 10.10.2013
(51) Int. Cl.: A61C 8/00, A61C 13/263

(54) **DENTAL IMPLANT AND PROSTHETIC ATTACHMENT SYSTEM THAT CONNECTS TO SAID IMPLANT BY MEANS OF A MECHANICAL SPRING WITHOUT SCREWING**
ZAHNIMPLANTAT UND PROTHESENBEFESTIGUNGSSYSTEM MIT VERBINDUNG ZU DIESEM IMPLANTAT MITTELS EINER MECHANISCHEN FEDER OHNE SCHRAUBEN
IMPLANT DENTAIRE ET SYSTÈME D'ATTACHE PROTHÉTIQUE LIÉ AUDIT IMPLANT PAR L'INTERMÉDIAIRE D'UN RESSORT MÉCANIQUE SANS VISSAGE

(30) Priority: 10.10.2012 ES 201231558
(43) Date of publication of application: 09.07.2014
(73) Proprietor: Clinica Dental Costa Codina, S.L., 08401 Granollers Barcelona (ES)
(72) Inventor: COSTA CODINA, Xavier, 08520 Les Franqueses del Valles (Barcelona) (ES)
(74) Representative: Carpintero Lopez, Francisco
(86) International application number: PCT/ES2013/070700
(87) International publication number: WO 2014/057158

(56) References cited:
- WO-A1-2014/198681
- DE-A1- 4 000 112
- DE-A1-102009 015 358
- DE-A1-102010 060 567
- KR-B1- 100 668 368
- US-A1- 2003 124 491
- US-A1- 2005 019 726
- US-A1- 2009 253 098

## Description

### Object of the Invention

The present invention relates to the field of dental implants, and more specifically to their direct screwless connection with rotary or non-rotary prosthetic abutments by means of a mechanical spring.

### Background of the Invention

The use of dental implants and prostheses in the field of dentistry for replacing lost teeth or teeth that must be extracted for any reason is extremely widespread. The first phase of a dental prosthesis implantation method consists of the insertion of a dental implant in bone. Dental implants are essentially screws which, once inserted in bone tissue, attach to the tissue by means of a biological process known as osseointegration. In some cases, a transmucosal post is connected to this dental implant; and finally an abutment is installed on the transmucosal post or directly on the dental implant itself. The abutments are used as a base on which the permanent or temporary dental restorations are installed. The abutments are also used to take measurements in order to make permanent prostheses.

Generally, according to the known technique, the connections between the various elements described above can be rotary or non-rotary. Given that the known elements are designed to provide either one of said connections, the dentist must decide on the type of connection to use in each case before he/she starts working on the patient

DE 10 2010 060 567 A1 discloses the connection of a dental implant to an abutment via spring elements.

US 2009/0253098 A1 discloses a dental implant having an inner geometry for providing a connection to a rotational driving tool.

The objective of the present invention is therefore to provide an implant which allows inserting the lower end of a corresponding abutment and preventing the subsequent involuntary extraction thereof once inserted.

### Description of the Invention

In a first aspect, the present invention relates to a dental assembly according to claim 1.

According to a second aspect, the present invention relates to a dental assembly according to claim 3.

### Description of the Drawings

The present invention will be better understood in reference to the following drawings illustrating the preferred embodiments of the invention which are provided by way of example and must not be interpreted as limiting the invention in any manner.
Figure 1 shows a longitudinal section view of the upper end of a dental implant according to the preferred embodiment of the present invention.
Figure 2 shows a perspective view of a rotary abutment according to a preferred embodiment of the present invention.
Figure 3 shows a perspective view of a non-rotary abutment according to another preferred embodiment of the present invention.

### Preferred Embodiment of the Invention

As is already known in the art, a dental implant is essentially a screw suitable for being inserted in bone tissue and for osseointegration therein, and it is furthermore used as a support for coupling an abutment at its upper end. Said abutment can be directly coupled on the dental implant or on a post which is in turn coupled on the dental implant, without it affecting how the present invention is carried out.

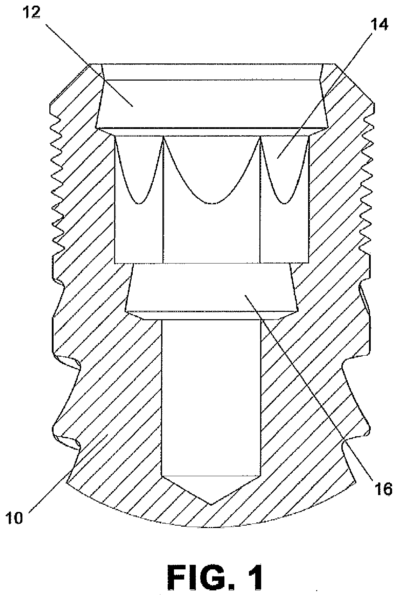

As seen in the attached Figure 1, the dental implant (10) according to the preferred embodiment of the present invention has at its upper end a hole for receiving an abutment (20, 20'). The hole of the dental implant (10) has a first upper conical housing (12), followed by a sector having a polygonal cross-section (14) and finally by a second lower conical housing (16). The sector (14) preferably has a hexagonal cross-section, although other types of polygonal cross-sections are also possible.

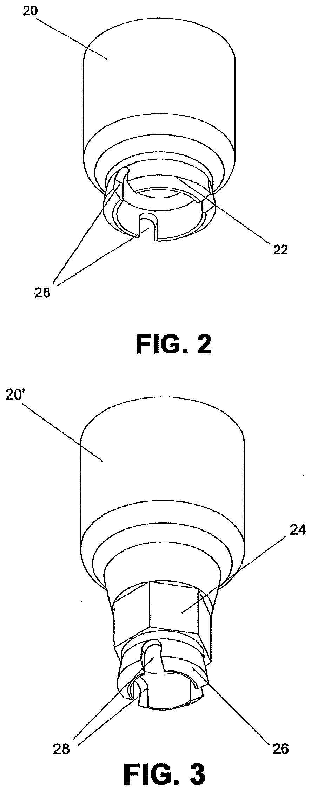

Therefore, the first housing (12) provides a rotary connection with an abutment (20) the lower end (22) of which is conical-shaped, corresponding to the first housing (12), such as shown in the attached Figure 2. In turn, the second housing (16) provides a non-rotary connection with an abutment (20') the lower end of which has a sector having a polygonal cross-section (24), corresponding to the sector having a polygonal cross-section (14) of the dental implant (10), followed by a conical-shaped lower end (26) corresponding to the second housing (16), such as the abutment (20') shown in Figure 3.

Returning to Figure 1, it can be seen that according to the preferred embodiment of the present invention, each of the first housing (12) and the second housing (16) have a corresponding step. As a result of said step, the insertion of the lower end of a corresponding abutment (20, 20') is allowed and the subsequent involuntary extraction thereof is prevented once inserted. However, said abutment (20, 20') can preferably be extracted from the dental implant (10) by means of dentist intervention.

According to another embodiment of the present invention not shown in the attached drawings, the dental implant (10) has at its upper end a lampshade shape, such that the upper end thereof is at the gum level once inserted. The dental implant (10) of the present invention is preferably, but in a non-limiting manner, made of commercial titanium grade IV.

The present invention also discloses the connection between a dental implant (10) such as that previously described in this document, together with at least one element for coupling thereon such as at least one abutment (20, 20') and/or at least one bridge. The at least one abutment (20, 20') can be of the type shown in Figure 2 or of the type shown in Figure 3.

Now referring to Figure 2, it can be seen that an abutment (20) according to the preferred embodiment of the present invention has a conical-shaped lower end (22), corresponding to the first housing (12) of the dental implant (10) described above. Therefore, as previously described in this document, a rotary connection is provided between the dental implant (10) and the abutment (20). Furthermore, said abutment (20) also has a plurality of longitudinal grooves (28) at its lower end (22). As a result of said longitudinal grooves (28), said lower end (22) can be inwardly deformed, thus snap fitting it into its corresponding housing (12) in the dental implant (10).

Now referring to Figure 3, another abutment (20') according to the preferred embodiment of the present invention can be seen. In this case, the abutment (20') has a sector having a polygonal cross-section (24), corresponding to the sector having a polygonal cross-section (14) of the dental implant (10) described above. Said sector having a polygonal cross-section (24) is followed by a conical-shaped lower end (26), corresponding to the second housing (16) of the dental implant (10). Therefore, as a result of said sectors having a polygonal cross-section (14, 24), a non-rotary connection is provided between the dental implant (10) and the abutment (20').

According to the preferred embodiment of the present invention, the implant/abutment assembly comprises both an abutment (20) of the type shown in Figure 2 and an abutment (20') of the type shown in Figure 3, such that, after the insertion of the dental implant (10), the dentist can choose to use one abutment or the other according to the type of connection (rotary or non-rotary) to be used in each case.

According to the second aspect of the present invention, the implant/post assembly comprises at least one post, instead of said at least one abutment (20, 20'). The connection between the post and the dental implant (10) is made in a manner similar to the connection between the abutment (20, 20') and the dental implant (10) described above. Therefore, the at least one post of the present invention is selected from the group consisting of a post the lower end of which is conical-shaped, corresponding to the first housing of the dental implant, (therefore providing a rotary connection with the dental implant) and a post the lower end of which has a sector having a polygonal cross-section, corresponding to the sector having a polygonal cross-section of the dental implant, followed by a conical-shaped lower end, corresponding to the second housing of the dental implant (therefore providing a non-rotary connection with the dental implant). In this case, the assembly also preferably comprises an abutment suitable for connection on the upper end of the post. Like in the case described above, if the assembly comprises posts for coupling to the dental implant, it preferably comprises a post of each of the types described above such that the dentist can decide, after installing the dental implant, if he/she wants to use a post with rotary connection or a post with non-rotary connection.

Like in the case of the abutment described above in reference to Figures 2 and 3, the post included in the assembly of the present invention also has, according to a preferred embodiment thereof, a plurality of longitudinal grooves such that its lower end can be inwardly deformed thus snap fitting it into its corresponding housing.

According to a preferred embodiment of the present invention, the assembly provides the fixed securing of an abutment on a dental implant (through a post or not) without the need of resorting to fixing screws.

According to another embodiment of the present invention, the assembly of the present invention also comprises at least one screw for the integral fixing of the other elements making up the assembly (dental implant, post and abutment). In fact, the assembly of the invention can comprise a flexible screw suitable for being coupled to the post and going through the abutment completely, a short screw suitable for being fixed on the preceding flexible screw, and/or a reinforcement screw to reinforce all the other elements of the assembly in an integral manner.

## Claims

1. Dental assembly comprising a dental implant (10) and at least one abutment (20,20'), wherein the dental implant (10) consists of a screw suitable for being inserted in bone tissue and also suitable for coupling the abutment (20,20') at its upper end, wherein said implant (10) has at its upper end a hole for receiving said abutment (20,20'), **characterized in that** said hole having a first upper conical housing (12) followed by a sector having a polygonal cross-section (14) and finally by a second lower conical housing (16), and **in that** the abutment (20,20') is selected from the group consisting of:
o a rotary abutment (20) the lower end (22) of which is conical-shaped, corresponding to the first upper conical housing (12) of the dental implant (10), such that the first upper conical housing provides a rotary connection for the abutment (20) when the abutment is received by the implant; and
o a non-rotary abutment (20') the lower end of which has a sector having a polygonal cross-section (24), corresponding to the sector having a polygonal cross-section (14) of the dental implant (10), followed by a conical-shaped lower end (26) corresponding to the second lower conical housing (16) of the dental implant (10), such that the second lower conical housing (16) provides a non-rotary connection for the abutment (20') when the abutment is received by the implant;
and where each of the first housing (12) and the second housing (16) has a step to prevent the involuntary extraction of the abutment (20, 20' once inserted.

2. Dental assembly according to claim 1, **characterized in that** the conical-shaped lower end (22, 26) of the abutment (20,20') has a plurality of longitudinal grooves (28), said lower end being able to be inwardly deformed thus snap fitting it into the corresponding housing (12, 16) of the implant.

3. Dental assembly comprising a dental implant (10), at least one post and an abutment suitable for connection on an upper end of the post, wherein: the dental implant (10) consists of a screw suitable for being inserted in bone tissue and also suitable for coupling a post at its upper end, wherein said implant (10) has at its upper end a hole for receiving said post, **characterized in that** said hole having a first upper conical housing (12) followed by a sector having a polygonal cross-section (14) and finally by a second lower conical housing (16), and **in that**
the post is selected from the group consisting of:
∘ a rotary post the lower end of which is conical-shaped, corresponding to the first upper conical housing (12) of the dental implant (10), such that the first upper conical housing (12) provides a rotary connection for the post when the post is received by the implant; and
∘ a non-rotary post the lower end of which has a sector having a polygonal cross-section, corresponding to the sector having a polygonal cross-section (14) of the dental implant (10), followed by a conical-shaped lower end corresponding to the second lower conical housing (16) of the dental implant (10), such that the second lower conical housing (16) provides a non-rotary connection for the post when the post is received by the implant;
and where each of the first housing (12) and the second housing (16) has a step to prevent the involuntary extraction of the post once inserted.

4. Dental assembly according to claim 3, **characterized in that** the conical-shaped lower end of the post has a plurality of longitudinal grooves, said lower end being able to be inwardly deformed thus snap fitting it into the corresponding housing (12, 16) of the implant.

5. Dental assembly according to any of claims 1 to 4, **characterized in that** it further comprises at least one screw for the integral fixing of the other elements making up the assembly.

6. Dental assembly according to claim 1 or 3, **characterized in that** the sector having a polygonal cross-section (14) has a hexagonal cross-section.

7. Dental assembly according to any of the preceding claims 1, 3 or 6, **characterized in that** it has a lampshade or cylindrical shape at its upper end.

8. Dental assembly according to any of the preceding claims 1, 3, 6 or 7, **characterized in that** it is made of commercial titanium grade IV.

## Patentansprüche

1. Zahnmedizinische Anordnung umfassend ein zahnmedizinisches Implantat (10) und mindestens eine Stütze (20, 20'), wobei das zahnmedizinische Implantat (10) aus einer Schraube besteht, die dafür geeignet ist, in Knochengewebe eingesetzt zu werden und auch dafür geeignet ist, die Stütze (20, 20') an ihrem oberen Ende zu koppeln, wobei
das Implantat (10) an seinem oberen Ende ein Loch aufweist, um die Stütze (20, 20') aufzunehmen, **dadurch gekennzeichnet, dass**
das Loch ein erstes oberes konisches Gehäuse (12) aufweist, gefolgt von einem Bereich der einen polygonalen Querschnitt (14) hat und schließlich von einem zweiten unteren konischen Gehäuse (16),
und dadurch, dass
die Stütze (20, 20') ausgewählt ist aus der Gruppe bestehend aus:
o einer rotierenden Stütze (20), deren unteres Ende (22) konisch geformt ist, entsprechend des ersten oberen konischen Gehäuses (12) des zahnmedizinischen Implantats (10), sodass das erste obere konische Gehäuse eine rotierende Verbindung für die Stütze (20) bereitstellt, wenn die Stütze von dem Implantat aufgenommen wird; und
o eine nicht rotierende Stütze (20'), deren unteres Ende einen Bereich mit einem polygonalen Querschnitt (24) hat, entsprechend des Bereichs mit einem polygonalen Querschnitt (14) des zahnmedizinischen Implantats (10), gefolgt von einem konisch geformten unteren Ende (26) entsprechend des zweiten unteren konischen Gehäuses (16) des zahnmedizinischen Implantats (10), so dass das zweite untere konische Gehäuse (16) eine nicht-rotierende Verbindung für die Stütze (20') vorsieht, wenn die Stütze von dem Implantat aufgenommen wird;
und bei dem jedes erste Gehäuse (12) und zweite Gehäuse (16) einen Absatz aufweist, der verhindert, dass die Stütze (20, 20') sobald sie eingesetzt ist unfreiwillig herausgezogen wird.

2. Zahnmedizinische Anordnung nach Anspruch 1, **dadurch gekennzeichnet, dass** das konisch geformte untere Ende (22, 26) der Stütze (20, 20') eine Vielzahl Längsnuten (28) hat, wobei das untere Ende im Inneren deformiert werden kann, um so in das entsprechende Gehäuse (12, 16) des Implantats einschnappbar zu sein.

3. Zahnmedizinische Anordnung umfassend ein zahnmedizinisches Implantat (10), mindestens einen Stift und eine Stütze, die dafür geeignet ist, mit einem oberen Ende des Stifts verbunden zu sein, wobei
das zahnmedizinische Implantat (10) aus einer Schraube besteht, die dafür geeignet ist, in Knochengewebe eingesetzt zu werden und auch dafür geeignet ist, einen Stift an ihr unteres Ende zu koppeln, wobei das Implantat (10) an seinem oberen Ende ein Loch zur Aufnahme des Stifts hat, **dadurch gekennzeichnet, dass** das Loch
ein erstes oberes konisches Gehäuse (12) hat, gefolgt von einem Bereich mit einem polygonalen Querschnitt (14) und schließlich von einem zweiten unteren konischen Gehäuse (16), und dadurch, dass
der Stift ausgewählt ist aus der Gruppe aus
∘ einem rotierenden Stift, dessen unteres Ende entsprechend des ersten oberen konischen Gehäuses (12) des zahnmedizinischen Implantats (10) konisch geformt ist, sodass das erste obere konische Gehäuse (12) eine rotierende Verbindung für den Stift bereitstellt, wenn der Stift von dem Implantat aufgenommen wird; und
∘ einem nicht rotierenden Stift, dessen unteres Ende einen polygonalen Querschnitt aufweist entsprechend des Bereichs mit einem polygonalen Querschnitt (4) des zahnmedizinischen Implantats (10), gefolgt von einem konisch geformten unteren Ende entsprechend des zweiten unteren konischen Gehäuses (16) des zahnmedizinischen Implantats (10), sodass das zweite untere konische Gehäuse (16) eine nicht rotierende Verbindung für den Stift bereitstellt, wenn der Stift von dem Implantat aufgenommen wird;
und bei dem jedes erste Gehäuse (12) und zweite Gehäuse (16) einen Absatz hat, um zu verhindern, dass der Stift sobald er eingesetzt ist unfreiwillig herausgezogen wird.

4. Zahnmedizinische Anordnung nach Anspruch 3, **dadurch gekennzeichnet, dass** das konisch geformte untere Ende des Stifts eine Vielzahl Längsnuten hat, wobei das untere Ende im Inneren deformiert werden kann, um so in dem entsprechenden Gehäuse (12, 16) des Implantats einschnappbar zu sein.

5. Zahnmedizinische Anordnung nach einem der Ansprüche 1 bis 4, **dadurch gekennzeichnet, dass** sie des Weiteren mindestens eine Schraube zur integralen Befestigung der anderen Elemente, die die Anordnung bilden, umfasst.

6. Zahnmedizinische Anordnung nach Anspruch 1 oder 3, **dadurch gekennzeichnet, dass** der Bereich mit dem polygonalen Querschnitt (14) einen hexagonalen Querschnitt hat.

7. Zahnmedizinische Anordnung nach einem der vorhergehenden Ansprüche 1, 3 oder 6, **dadurch gekennzeichnet, dass** sie eine lampenschirmartige oder zylindrische Form an ihrem oberen Ende hat.

8. Zahnmedizinische Anordnung nach einem der vorhergehenden Ansprüche 1, 3, 6 oder 7, **dadurch gekennzeichnet, dass** sie aus kommerziellem Titan der Stufe IV hergestellt ist.

## Revendications

1. Ensemble dentaire comportant un implant dentaire (10) et au moins une butée (20, 20'), dans lequel l'implant dentaire (10) consiste en une vis apte à être insérée dans un tissu osseux et également apte à coupler la butée (20, 20') à son extrémité supérieure, dans lequel
ledit implant (10) présente à son extrémité supérieure un trou pour recevoir ladite butée (20, 20'), **caractérisé en ce que**
ledit trou a un premier logement supérieur conique (12) suivi d'un secteur ayant une section transversale polygonale (14) et enfin d'un second logement inférieur conique (16),
et **en ce que**
la butée (20, 20') est sélectionnée parmi le groupe consistant en :
∘ une butée rotative (20) dont l'extrémité inférieure (22) est de forme conique, correspondant au premier logement supérieur conique (12) de l'implant dentaire (10), de sorte que le premier logement supérieur conique procure une liaison rotative pour la butée (20) lorsque la butée est reçue par l'implant ;et
∘ une butée non rotative (20') dont l'extrémité inférieure présente un secteur de section transversale polygonale (24), correspondant au secteur présentant une section transversale polygonale (14) de l'implant dentaire (10), suivi d'une extrémité inférieure de forme conique (26) correspondant au second logement inférieur conique (16) de l'implant dentaire (10), de sorte que le second logement inférieur conique (16) procure une liaison non-rotative pour la butée (20') lorsque la butée est reçue par l'implant ;
et où chacun des premier logement (12) et second logement (16) présente une marche pour empêcher l'extraction involontaire de la butée (20, 20') une fois insérée.

2. Ensemble dentaire selon la revendication 1, **caractérisé en ce que** l'extrémité inférieure de forme conique (22, 26) de la butée (20, 20') présente une pluralité de gorges longitudinales (28), ladite extrémité inférieure étant apte à être déformée vers l'intérieur, se fixant ainsi par encliquetage dans le logement correspondant (12, 16) de l'implant.

3. Ensemble dentaire comportant un implant dentaire (10) et au moins un pilier et une butée apte à être connectée à une extrémité supérieure du pilier, dans lequel l'implant dentaire (10) consiste en une vis apte à être insérée dans un tissu osseux et également apte à coupler un pilier à son extrémité supérieure, dans lequel
ledit implant (10) présente à son extrémité supérieure un trou pour recevoir ledit pilier, **caractérisé en ce que**
ledit trou a un premier logement supérieur conique (12) suivi d'un secteur ayant une section transversale polygonale (14) et enfin d'un second logement inférieur conique (16),
et **en ce que**
le pilier est sélectionné parmi le groupe consistant en :
∘ un pilier rotatif dont l'extrémité inférieure est de forme conique, correspondant au premier logement supérieur conique (12) de l'implant dentaire (10), de sorte que le premier logement supérieur conique (12) procure une liaison rotative pour le pilier lorsque le pilier est reçu par l'implant ;et
∘ un pilier non rotatif dont l'extrémité inférieure présente un secteur de section transversale polygonale, correspondant au secteur présentant une section transversale polygonale (14) de l'implant dentaire (10), suivi d'une extrémité inférieure de forme conique correspondant au second logement inférieur conique (16) de l'implant dentaire (10), de sorte que le second logement inférieur conique (16) procure une liaison non-rotative pour le pilier lorsque le pilier est reçu par l'implant ;
et où chacun des premier logement (12) et second logement (16) présente une marche pour empêcher l'extraction involontaire du pilier une fois inséré.

4. Ensemble dentaire selon la revendication 3, **caractérisé en ce que** l'extrémité inférieure conique du pilier présente une pluralité de gorges longitudinales, ladite extrémité inférieure étant apte à être déformée vers l'intérieur, se fixant ainsi par encliquetage dans le logement correspondant (12, 16) de l'implant.

5. Ensemble dentaire selon l'une quelconque des revendications 1 à 4, **caractérisé en ce qu'**il comprend en outre au moins une vis pour la fixation intégrale des autres éléments constitutifs de l'ensemble.

6. Ensemble dentaire selon l'une quelconque des revendications 1 à 3, **caractérisé en ce que** le secteur ayant une section transversale polygonale (14) a une section transversale hexagonale.

7. Ensemble dentaire selon l'une quelconque des revendications précédentes 1, 3 ou 6, **caractérisé en ce qu'**il présente une forme en abat-jour ou cylindrique à son extrémité supérieure.

8. Ensemble dentaire selon l'une quelconque des revendications précédentes 1, 3, 6 ou 7, **caractérisé en ce qu'**il est en titane du commerce de grade IV.
